# EUROPÄISCHE PATENTSCHRIFT

(11) **EP 1 945 697 B1**
(45) Veröffentlichungstag und Bekanntmachung des Hinweises auf die Patenterteilung: **19.06.2019**
(21) Anmeldenummer: 06807520.9
(22) Anmeldetag: 25.10.2006
(51) Int. Cl.: C08J 7/04, B32B 38/00, B32B 25/08

(54) **ARTIKEL ENTHALTEND GUMMI, THERMOPLASTISCHES POLYURETHAN UND TECHNISCHEN KUNSTSTOFF**
ARTICLES COMPRISING RUBBER, THERMOPLASTIC POLYURETHANE AND ENGINEERING POLYMER
ARTICLE CONTENANT DU CAOUTCHOUC, UN POLYURETHANNE THERMOPLASTIQUE ET UNE MATIERE PLASTIQUE TECHNIQUE

(30) Priorität: 03.11.2005 DE 102005052932
(43) Veröffentlichungstag der Anmeldung: 23.07.2008
(73) Patentinhaber: BASF SE, 67056 Ludwigshafen am Rhein (DE)
(72) Erfinder: HILMER, Klaus, 49448 Brockum (DE); AUMER, Bernhard, 66996 Fischbach (DE)
(74) Vertreter: BASF IP Association
(86) Internationale Anmeldenummer: PCT/EP2006/067737
(87) Internationale Veröffentlichungsnummer: WO 2007/051737

(56) Entgegenhaltungen:
- EP-A- 1 568 487
- DE-A1- 10 308 989
- US-A- 4 312 693
- US-A1- 2004 213 934
- Lubrizol: "Product information Estane 5713", , 1 January 2014 (2014-01-01), XP055305971, Retrieved from the Internet: URL:https://www.lubrizol.com/TPU/Estane/57 13.pdf [retrieved on 2016-09-27]

## Beschreibung

Die Erfindung betrifft Artikel enthaltend thermoplastisches Polyurethan, das jeweils in direktem Kontakt sowohl mit Gummi als auch mit dem technischem Kunststoff, Polyamid, Polybutylenterephthalat und/oder Polyethylenterephthalat, bevorzugt Polyamid und/oder Polybutylenterephthalat, insbesondere Polyamid, haftend verbunden ist. Des weiteren bezieht sich die Erfindung auf Verfahren zur Herstellung eines Artikels bevorzugt gemäß einem der Ansprüche bevorzugt mittels Mehrkomponentenspritzguss, besonders bevorzugt mittels Zweikomponentenspritzguss enthaltend thermoplastisches Polyurethan, das jeweils in direktem Kontakt sowohl mit Gummi als auch mit technischem Kunststoff, bevorzugt Polyamid, Polybutylenterephthalat und/ oder Polyethylenterephthalat, besonders bevorzugt Polyamid und/oder Polybutylen-terephthalat, insbesondere Polyamid haftend verbunden ist.

Verbundkörper, die Gummi enthalten sind für viele Anwendungen interessant, insbesondere auch in der Schwingungsdämpfung. Dabei enthalten die Verbundkörper üblicherweise ein festes Material, beispielsweise Metall oder festen Kunststoff, das den Gummi in dem Verbundkörper zumindest teilweise fixiert und im Allgemeinen der Montage dient. Als feste Kunststoffe werden häufig technische Kunststoffe eingesetzt, die dem Fachmann allgemein bekannt sind. Nachteilig an deren Einsatz ist, dass bisher die Verbundfestigkeit zwischen dem festen Kunststoff und Gummi nur mit Klebstoffen als Haftvermittlern zufriedenstellend realisiert werden kann. Der Haftvermittler verursacht hohe Kosten im Fertigungsprozess. Zudem bereitet die Applikation der Klebstoffe in gängigen Verfahren erhebliche Probleme, die den Aufwand bei der Herstellung deutlich anheben.

Aufgabe der vorliegenden Erfindung war es somit, einen Verbund zwischen Gummi und technischen Kunststoffen, bevorzugt Polyamid, Polybutylenterephthalat und/oder Polyethylenterephthalat, besonders bevorzugt Polyamid und/oder Polybutylenterephthalat, insbesondere Polyamid, zu erreichen. Dabei sollte auf den Einsatz üblicher Klebstoffe verzichtet werden. Besonders bevorzugt sollten Artikel entwickelt werden, die mittels Spritzguss erhältlich sind und die einen Verbund zwischen Gummi und technischem Kunststoff beinhalten.

Diese Aufgaben konnten durch Artikel enthaltend thermoplastisches Polyurethan, das jeweils in direktem Kontakt sowohl mit Gummi als auch mit dem technischem Kunststoff, Polyamid, Polybutylenterephthalat und/oder Polyethylenterephthalat, besonders bevorzugt Polyamid und/oder Polybutylenterephthalat, insbesondere Polyamid haftend verbunden ist, gelöst werden. Dabei befindet sich das thermoplastische Poly-urethan bevorzugt zwischen dem Gummi und dem technischen Kunststoff. Durch das thermoplastische Polyurethan wird somit die Haftung zwischen dem Gummi und dem technischen Kunststoff hergestellt. Zwischen dem thermoplastischen Polyurethan und dem Gummi und zwischen dem thermoplastischen Polyurethan und dem technischen Kunststoff liegt dabei bevorzugt kein Haftvermittler vor. "Ohne chemischen Haftvermittler" bedeutet dabei, dass zwischen dem thermoplastischen Polyurethan und dem Gummi bzw. dem technischen Kunststoff, insbesondere dem Polyamid keine weitere Komponente (Haftvermittler), d.h. keine Komponente, die sich von dem thermoplastischen Polyurethan und dem Gummi bzw. dem technischen Kunststoff, insbesondere dem Polyamid unterscheidet, insbesondere kein Klebstoff vorliegt. Durch die Plasmabehandlung des Gummiartikels wird gewährleistet, dass das thermoplastische Polyurethan an dem Gummi haftet. Andererseits bereitet die Haftung von Polyamid an thermoplastischem Polyurethan keine Probleme, so dass beispielsweise vor dem Anspritzen des Polyamids an das thermoplastische Polyurethan auf eine Plasmabehandlung der Oberfläche, beispielsweise des thermoplastischen Polyurethans, verzichtet werden kann.

Durch Einlegen eines plasmabehandelten Gummiteils können mit TPU als haftvermittelnde Schicht zum Thermoplast, z.B. Polyamid, in automatisch ablaufenden Mehrkomponenten-Spritzgießprozessen diese Werkstoffe kombiniert werden. Ein solches Verfahren kommt ohne Lösungsmittel oder reaktive und gesundheitsgefährdende Stoffe aus und könnte diese Werkstoffe automatisch und kostengünstig verbinden. Eine Lösung Gummiteil-Vulkanisation und Thermoplastanspritzung in einer Maschine und einem Werkzeug zu realisieren ist derzeit nicht sinnvoll machbar. Eine Fertigung des Gummiteils bzw. eines Einlegeteils mit Gummioberfläche (das Einlegeteil kann ja auch schon einen Einleger in sich tragen) unabhängig von der Überspritzung ist sinnvoll und macht die Automatisierung der Fertigung des Gesamtbauteils einfacher. Die Vorbehandlung der Gummioberfläche, das Einlegen und das Mehrkomponenten-Spritzgießverfahren sowie das Entformen kann problemlos zu einem Gesamtprozess integriert werden. Die Plasmabehandlung des Einlegeteils erfolgt vorzugsweise außerhalb der Spritzgussmaschine. Die Plasmabehandlung, das Einlegen in die Spritzgussmaschine und das Spritzgießen können bevorzugt kombiniert und zusammen automatisiert werden. Dabei weisen die erfindungsgemäßen Verbundkörper insbesondere eine Gewichtsdeduzierung gegenüber Alu-Gummi oder Stahl-Gummi Bauteilen auf. Zudem wird eine deutliche Kostenreduzierung gegenüber dem Einsatz eines Klebstoffes als Haftvermittler erzielt. Außerdem benötigt Gummi-Polyamid keinen zusätzlichen Korrosionsschutz.

Vorteile ergeben sich weiterhin in der großen Designfreiheit durch das Überspritzen der Gummilage mit einer beliebigen Kunststoffstruktur. Der Verbund kann gezielt an lokalen Stellen realisiert werden. Thermoplastisches Polyurethan und technische Kunststoffe wie z.B. Polyamid können relativ kostengünstig im 2-K Spritzguss verbunden werden, was mit Klebstoffen nicht erreichbar ist.

Zur haftenden Kombination verschiedener thermoplastischer Kunststoffe ist es dabei bekannt, im Mehrkomponenten-, z.B. Zweikomponentenspritzguss (≥ 2-K Spritzguss) verschiedene Kunststoffe durch direktes Anspritzen haftend miteinander zu verbinden. Zur Haftvermittlung wurde hierzu in DE-B 103 08 727, DE-A 103 08 989 sowie von Simon Amesöder et al., Kunststoffe 9/2003, Seiten 124 bis 129 für bestimmte Materialkombinationen empfohlen, die Oberfläche der einen Komponente mit Plasma zu behandeln und anschließend die andere Komponente an diese plasmabehandelte Oberfläche anzuspritzen.

Bevorzugt sind das Gummi und der technische Kunststoff, insbesondere das Polyamid jeweils getrennt in direktem Kontakt mit dem thermoplastischen Polyurethan verbunden, besonders bevorzugt liegt das thermoplastische Polyurethan zwischen dem Gummi und dem technischen Kunststoff, insbesondere dem Polyamid vor.

In den erfindungsgemäßen Artikeln liegt das thermoplastische Polyurethan bevorzugt zwischen dem Gummi und dem technischen Kunststoff, insbesondere dem Polyamid vor, wobei die Schicht des thermoplastischen Polyurethans bevorzugt eine Dicke zwischen 0,2 mm und 6 mm, bevorzugt zwischen 0,2 mm und 5 mm, besonders bevorzugt zwischen 0,2 mm und 1,0 mm aufweist. Bei den erfindungsgemäßen Artikeln handelt es sich bevorzugt um Zweikomponentenspritzgussartikel mit Gummi Einlegeteil.

Als Artikel kommen insbesondere Produkte in Betracht, bei denen üblicherweise Gummi haftend an einem harten Kunststoff vorliegt. Beispielsweise kommen dabei Gummilager, z.B. zur Lagerung von Maschinen oder Motoren, z.B. in Kraftfahrzeugen oder in Kraftfahrzeugfahrwerken in Betracht. Beispiele sind auch Rundlager, bei denen das Gummi als elastische Komponente in Form eines ringförmigen Artikels zwischen einer inneren und einer äußeren Hülse oder Buchse auf Basis von Polyamid angeordnet ist. Der Gummi kann eine beliebige Form haben, um z.B. einen gewünschten Kraft-Weg Verlauf der Lagerstelle zu bekommen und kann damit in jeder Schwingungs- oder Stoßdämpfenden Lagerung in Frage kommen. Klassische Einsatzgebiete sind schwingungsdämpfende und geräuschreduzierende Bauteile oder Bauelemente, insbesondere Lagerungen von Maschinen, insbesondere Fahrwerks- und Motorlagerungen. Die Bauteile sind in der Regel hoch belastet. Im Fahrzeugbereich wie z.B. bei Motorlagern oder Koppelstützen sind Spannungen im Thermoplast bis zu 200 MPa bei 23°C möglich. Medienbeständigkeit gegen Salzwasser, Motoröle und Batteriesäuren sind ebenso gefordert, wie geringe Kriechneigung bei Einsatztemperaturen zwischen -40°C und 120°C. diesen Anforderungen wird das erfindungsgemäße Verbundelement gerecht.

Bevorzugt handelt es sich bei den erfindungsgemäßen Artikeln um einen Mehrkomponenten-, bevorzugt Zweikomponentenspritzgussartikel, d.h. Artikel, die im Mehrkomponentenspritzguss, bevorzugt Zweikomponentenspritzguss hergestellt werden, wobei der Gummiartikel bevorzugt als Einlegeteil in die Spritzgießapparatur eingelegt werden kann. Zweikomponentenspritzguss ist für andere Materialkombinationen allgemein bekannt und vielfältig beschrieben. Üblicherweise wird eine Komponente in ein Formwerkzeug gespritzt und anschließend die zweite und dritte Komponente angespritzt.

Eine weitere Aufgabe bestand darin, ein möglichst effizientes und effektives Verfahren zu entwickeln, mit dem Artikel, bevorzugt gemäß einem der Ansprüche, enthaltend thermoplastisches Polyurethan, das jeweils in direktem Kontakt sowohl mit Gummi als auch mit technischem Kunststoff, bevorzugt Polyamid, Polybutylenterephthalat und/ oder Polyethylenterephthalat, besonders bevorzugt Polyamid und/oder Polybutylenterephthalat, insbesondere Polyamid haftend verbunden ist, erhältlich sind. Dabei sollten die eingangs dargestellten Artikel bevorzugt mittels Spritzguss, besonders bevorzugt mittels Mehrkomponentenspritzguss, insbesondere mittels Zweikomponentenspritzguss, bevorzugt mit Gummieinlegeteil, herstellbar sein.

Diese Aufgabe konnte dadurch gelöst werden, dass man die Oberfläche eines Gummiartikels plasmabehandelt, anschließend das thermoplastische Polyurethan, bevorzugt in geschmolzenem Zustand, mit der plasmabehandelten Oberfläche in Kontakt bringt, bevorzugt mittels Spritzguss anspritzt, und danach den technischen Kunststoff, bevorzugt Polyamid, Polybutylenterephthalat und/oder Polyethylenterephthalat, besonders bevorzugt Polyamid und/oder Polybutylenterephthalat, insbesondere Polyamid auf das thermoplastische Polyurethan aufträgt, bevorzugt mittels Spritzguss anspritzt. Bevorzugt wird man somit das thermoplastische Polyurethane mittels Spritzguss auf die plasmabehandelte Oberfläche des Gummis auftragen. Das thermoplastische Polyurethan kann auf dem Gummiartikel bevorzugt eine Schicht mit einer Dicke zwischen 0,3 mm und 6 mm, bevorzugt zwischen 0,2 mm und 5 mm, besonders bevorzugt zwischen 0,2 mm und 1,0 mm bilden. Auch den technischen Kunststoff wird man bevorzugt mittels Spritzguss auf die Oberfläche des thermoplastischen Polyurethans auftragen.

Besonders bevorzugt kann das erfindungsgemäße Verfahren somit derart erfolgen, dass man die Oberfläche des Gummi-Einlegeteils plasmabehandelt, das plasmabehandelte Gummi-Einlegeteil in eine Form einlegt, anschließend auf die plasmabehandelte Oberfläche thermoplastisches Polyurethan mittels Spritzguss aufträgt und danach in der gleichen Form technischen Kunststoff mittels Spritzguss auf das thermoplastische Polyurethan anspritzt.

Durch dieses erfindungsgemäße Verfahren ist es erstmals möglich, ohne Klebstoffe im Spritzguss einen haftenden Verbund zwischen Gummi und technischem Kunststoff zu erreichen. Dabei erfolgt die Haftung über das thermoplastische Polyurethan, das den Vorteil bietet, wie auch der technische Kunststoff mittels Spritzguss verarbeitbar zu sein. Damit wird ein zugleich effektives und effizientes Verfahren bereitgestellt, das Gummi-technischer Kunststoff-Haftverbunde ermöglicht, ohne auf Klebstoffe und deren schwierige Anwendung zurückgreifen zu müssen.

Besonders bevorzugt wird man derart vorgehen, dass man die Oberfläche eines Gummiartikels plasmabehandelt, danach auf die plasmabehandelte Oberfläche des Gummis thermoplastisches Polyurethan mittels Spritzguss, bevorzugt Mehrkomponentenspritzguss, aufträgt, und anschließend bevorzugt im selben Werkzeug mittels Spritzguss technischen Kunststoff, bevorzugt Polyamid, Polybutylenterephthalat und/oder Polyethylenterephthalat, besonders bevorzugt Polyamid und/oder Polybutylenterephthalat, insbesondere Polyamid an das thermoplastische Polyurethan anspritzt. Dabei wird die die Oberfläche des Gummi-Einlegeteils plasmabehandelt, indem man in einer Plasmaquelle mittels Hochspannungsentladung ein Plasma erzeugt, dieses Plasma mittels einer Plasmadüse mit der Oberfläche des Gummiartikels in Kontakt bringt und die Plasmaquelle in einem Abstand zwischen 2 mm und 25 mm mit einer Geschwindigkeit zwischen 0,1 m/min und 400 m/min relativ zur Oberfläche des Gummiartikels bewegt und die Plasmabehandlung zwischen 1 ms und 100 s dauert, man dann das plasmabehandelte Gummi-Einlegeteil in eine Form einlegt, anschließend auf die plasmabehandelte Oberfläche thermoplastisches Polyurethan mittels Spritzguss aufträgt und danach in der gleichen Form technischen Kunststoff mittels Spritzguss auf das thermoplastische Polyurethan anspritzt. Dabei kann die Plasmabehandlung des Gummiartikels in der Spritzgussform erfolgen, in der anschließend das thermoplastische Polyurethan an den Gummiartikel angespritzt wird, oder außerhalb der Spritzgussapparatur, wobei man in diesem Fall den plasmabehandelten Gummiartikel in die Spritzgussform einlegt. Bevorzugt wird man die Plasmabehandlung und das Einlegen in die Maschine miteinander kombinieren und automatisieren.

Besonders bevorzugt ist der Zweikomponentenspritzguss, wobei man die Oberfläche eines Gummiartikels plasmabehandelt, danach thermoplastisches Polyurethan mittels Spritzguss auf die plasmabehandelte Oberfläche des Gummiartikels aufträgt, bevorzugt anspritzt, und anschließend technischen Kunststoff an das thermoplastische Polyurethan anspritzt. Spritzgießen ebenso das Mehrkomponentenspritzgießen im Direktverfahren sowie auch im Einlegeverfahren, bei dem ein Artikel in ein Spritzgusswerkzeug eingelegt wird, ist allgemein bekannt.

Die Plasmabehandlung ist allgemein bekannt und beispielsweise in den eingangs zitierten Schriften dargestellt. Apparaturen zur Plasmabehandlung sind beispielsweise bei Plasmatreat GmbH, Bisamweg 10, 33803 Steinhagen erhältlich.

Bevorzugt wird man in einer Plasmaquelle mittels Hochspannungsentladung ein Plasma erzeugen, dieses Plasma mittels einer Plasmadüse mit der Oberfläche des Gummiartikels in Kontakt bringen und die Plasmaquelle in einem Abstand zwischen 2 mm und 25 mm mit einer Geschwindigkeit zwischen 0,1 m/min und 200 m/min, besonders bevorzugt zwischen 0,2 m/min und
50 m/min relativ zur Oberfläche des Gummiartikels bewegt. Das Plasma wird man bevorzugt durch eine Gasströmung entlang der Entladungsstrecke auf die Oberfläche des Gummiartikels transportieren. Als aktivierte Teilchen des Plasmas, die die Oberfläche des Kunststoffs zur Haftung vorbereiten, sind insbesondere Ionen, Elektronen, Radikale und Photonen zu nennen. Die Plasmabehandlung dauert erfindungsgemäß zwischen 1 ms und 100 s. Als Gase können Sauerstoff, Stickstoff, Kohlendioxid und Gemische aus den vorgenannten Gasen, bevorzugt Luft, insbesondere Druckluft eingesetzt werden. Der Gasfluss kann bis 2 m³/h pro Düse betragen. Die Arbeitsfrequenz kann zwischen 10 und 30 kHz betragen. Die Anregungsspannung bzw. die Elektrodenspannung kann zwischen 5 und 10 kV betragen. Es kommen stehende oder rotierende Plasmadüsen in Betracht. Oberflächentemperatur des Bauteils kann zwischen 5°C und 250°C, bevorzugt zwischen 5°C und 200°C betragen.

Das Spritzgießen von thermoplastischen Kunststoffen ist allgemein bekannt und insbesondere auch für Polyamid und thermoplastisches Polyurethan vielfältig beschrieben. So ist das Prinzip des Zweikomponenten (2-K-) Spritzguss in der Abbildung 2 in Simon Amesöder et al., Kunststoffe 9/2003, Seiten 124 bis 129 dargestellt.

Die Temperatur beim Spritzgießen von thermoplastischem Polyurethan beträgt dabei bevorzugt zwischen 140 und 250°C, besonders bevorzugt zwischen 160 und 230°C. TPU werden bevorzugt möglichst schonend verarbeitet. Die Temperaturen können je nach Härte angepasst werden. Die Umfangsgeschwindigkeit beim Plastifizieren liegt bevorzugt kleiner oder gleich 0,2 m/s, der Staudruck beträgt bevorzugt zwischen 20 bis 200 bar. Die Einspritzgeschwindigkeit ist bevorzugt möglichst gering um Scherbeanspruchung gering zu halten. Die Kühlzeit ist bevorzugt ausreichend lang zu wählen, wobei der Nachdruck bevorzugt zwischen 30 und 80 % des Einspritzdruckes beträgt. Die Formen werden bevorzugt auf zwischen 30 und 70°C temperiert. Der Anguss wird bevorzugt an der stärksten Stelle des Bauteils gewählt. Bei flächigen Überspritzungen kann eine Anspritzpunkte-Kaskade eingesetzt werden.

Die Temperatur beim Spritzgießen von Polyamid, Polybutylenterephthalat und/oder Polyethylenterephthalat ist dem Fachmann allgemein bekannt und in der Literatur vielfältig beschrieben. Siehe hierzu auch: Martin Bichler "Kunststoffteile fehlerfrei spritzgießen" und Firmenschriften der Spritzgießmaschinenhersteller, z.B. Demag ergotech: "Spritzgießen-kurz und bündig".

Die Temperatur beim Spritzgießen von Polyamid beträgt bevorzugt zwischen 230 und 350°C, besonders bevorzugt zwischen 250 und 330°C. Die eingestellten Maschinentemperaturen können bevorzugt zwischen 240 und 290°C liegen, der Einzug bevorzugt zwischen 50 und 100°C. Der Einspritzdruck ist üblicherweise zwischen 50 und 2500 bar. Der Nachdruck wird bevorzugt zwischen 70 und 200 % des Einspritzdruckes gehalten. Plastifiziert wird bevorzugt mit bis zu 1 m/s Umfangsgeschwindigkeit der Schnecke, kann besonders bevorzugt jedoch nur so schnell durchgeführt werden, dass während der Abkühlzeit der Plastifiziervorgang beendet ist.

Zu den Komponenten Gummi, technischer Kunststoff, insbesondere Polyamid und thermoplastisches Polyurethan kann beispielhaft folgendes ausgeführt werden.

Unter dem allgemeinen Ausdruck "Gummi" sind in dieser Schrift allgemein bekannte vulkanisierte, natürliche oder synthetische Kautschuke zu verstehen. In dem erfindungsgemäßen Verfahren werden bevorzugt vorgefertigte Gummiartikel eingesetzt.

Als technische Kunststoffe können unter dieser Bezeichnung allgemein bekannte Produkte zum Einsatz kommen, beispielsweise Polyamide, Polycarbonate, Polyacetale, Polyester, Polymethacrylate, modifizierte Polyphenylenether sowie auf diesen Kunststoffen basierende Blends. Zur Definition von technischen Kunststoffen siehe Römpp Chemie Lexikon, 9. Auflage, 1992, Georg Thieme Verlag, Stuttgart, Deutschland. Die technischen Kunststoffe können bevorzugt verstärkt sein, beispielsweise mit Glasfasern. Bevorzugt kommen als technische Kunststoffe Polyamid (PA), Polybutylenterephthalat (PBT) und/oder Polyethylenterephthalat (PET) in Betracht. Als Polybutylenterephthalat und Polyethylenterephthalat können allgemein bekannte und kommerziell erhältliche Produkte eingesetzt werden.

Als Polyamid können allgemein bekannte Polyamidtypen eingesetzt werden, beispielsweise PA 6 und/oder PA 66, die bevorzugt aus unverzweigten Ketten bevorzugt mit zahlenmittleren Molekulargewichten zwischen 15000 und 50000 bestehen. In Frage kommen ferner Polyamid-ABS-Blends. Bevorzugt ist auch glasfaserverstärktes Polyamid, z.B. Polyamid, bevorzugt Polyamid 66, enthaltend zwischen 5 und 60 Gew.-% Glasfasern, besonders bevorzugt zwischen 5 und 40 Gew.-% Glasfasern, bezogen auf das Gesamtgewicht des Polyamids enthaltend die Glasfasern.

Thermoplastische Polyurethane, in dieser Schrift auch als TPU bezeichnet, und Verfahren zu ihrer Herstellung sind allgemein bekannt. Im allgemeinen werden TPUs durch Umsetzung von (a) Isocyanaten mit (b) gegenüber Isocyanaten reaktiven Verbindungen, üblicherweise mit einem Molekulargewicht (M_{w}) von 500 bis 10000, bevorzugt 500 bis 5000, besonders bevorzugt 800 bis 3000 und (c) Kettenverlängerungsmitteln mit einem Molekulargewicht von 50 bis 499 gegebenenfalls in Gegenwart von (d) Katalysatoren und/oder (e) üblichen Zusatzstoffen hergestellt. Die thermoplastischen Polyurethane weisen bevorzugt ein zahlenmittleres Molekulargewicht zwischen 40000 g/mol und 150000 g/mol auf. Der Schmelzpunkt des thermoplastischen Polyurethans beträgt bevorzugt zwischen 180°C und 230°C. Das thermoplastische Polyurethan weist bevorzugt keine freien Isocyanatgruppen auf.

Im Folgenden sollen beispielhaft die Ausgangskomponenten und Verfahren zur Herstellung der bevorzugten Polyurethane dargestellt werden. Die bei der Herstellung der Polyurethane üblicherweise verwendeten Komponenten (a), (b), (c) sowie gegebenenfalls (d) und/oder (e) sollen im Folgenden beispielhaft beschrieben werden:
a) Als organische Isocyanate (a) können allgemein bekannte aliphatische, cycloaliphatische, araliphatische und/oder aromatische Isocyanate eingesetzt werden, beispielsweise Tri-, Tetra-, Penta-, Hexa-, Hepta- und/oder Oktamethylendiisocyanat, 2-Methyl-pentamethylen-diisocyanat-1,5, 2-Ethyl-butylen-diisocyanat-1,4, Pentamethylen-diisocyanat-1,5, Butylen-diisocyanat-1,4, 1-Isocyanato-3,3,5-trimethyl-5-isocyanato-methyl-cyclohexan (Isophoron-diisocyanat, IPDI), 1,4- und/oder 1,3-Bis(isocyanatomethyl)cyclohexan (HXDI), 1,4-Cyclohexandiisocyanat, 1-Methyl-2,4- und/oder -2,6-cyclohexan-di-isocyanat und/oder 4,4'-, 2,4'- und 2,2'-Dicyclohexylmethan-diisocyanat, 2,2'-, 2,4'- und/oder 4,4'-Diphenylmethandiisocyanat (MDI), 1,5-Naphthylendiisocyanat (NDI), 2,4- und/ oder 2,6-Toluylendiisocyanat (TDI), Diphenylmethandiisocyanat, 3,3'-Dimethyldiphenyl-diisocyanat, 1,2-Diphenylethandiisocyanat und/oder Phenylendiisocyanat. Bevorzugt wird 4,4'-MDI verwendet. Für powder-slush-Anwendungen sind, wie eingangs dargestellt auch aliphatische Isocyanate bevorzugt, besonders bevorzugt 1-Isocyanato-3,3,5-trimethyl-5-isocyanato-methyl-cyclohexan (Isophoron-diisocyanat, IPDI) und/oder Hexamethylendiisocyanat (HDI), insbesondere Hexamethylendiisocyanat. Wie bereits eingangs dargestellt können als Isocyanat (a) auch Prepolymer eingesetzt werden, die frei Isocyanatgruppen aufweisen. Der NCO-Gehalt dieser Prepolymere beträgt bevorzugt zwischen 10 und 25 %. Die Prepolymere können den Vorteil bieten, dass aufgrund der Vorreaktion bei der Herstellung der Prepolymere eine geringere Reaktionszeit bei der Herstellung der TPU benötigt wird.
b) Als gegenüber Isocyanaten reaktive Verbindungen (b) können die allgemein bekannten gegenüber Isocyanaten reaktiven Verbindungen eingesetzt werden, beispielsweise Polyesterole, Polyetherole und/oder Polycarbonatdiole, die üblicherweise auch unter dem Begriff "Polyole" zusammengefasst werden, mit Molekulargewichten zwischen 500 und 8000, bevorzugt 600 bis 6000, insbesondere 800 bis weniger als 3000, und bevorzugt einer mittleren Funktionalität gegenüber Isocyanaten von 1,8 bis 2,3, bevorzugt 1,9 bis 2,2, insbesondere 2. Bevorzugt setzt man Polyetherpolyole ein, beispielsweise solche auf der Basis von allgemein bekannten Startersubstanzen und üblichen Alkylenoxiden, beispielsweise Ethylenoxid, Propylenoxid und/oder Butylenoxid, bevorzugt Polyetherole basierend auf Propylenoxid-1,2 und Ethylenoxid und insbesondere Polyoxytetramethylen-glykole. Die Polyetherole weisen den Vorteil auf, dass sie eine höhere Hydrolysestabilität als Polyesterole besitzen.

Weiterhin können als Polyetherole sogenannte niedrig ungesättigte Polyetherole verwendet werden. Unter niedrig ungesättigten Polyolen werden im Rahmen dieser Erfindung insbesondere Polyetheralkohole mit einem Gehalt an ungesättigten Verbindungen von kleiner als 0,02 meq/g, bevorzugt kleiner als 0,01 meq/g, verstanden.

Derartige Polyetheralkohole werden zumeist durch Anlagerung von Alkylenoxiden, insbesondere Ethylenoxid, Propylenoxid und Mischungen daraus, an die oben beschriebenen Diole oder Triole in Gegenwart von hochaktiven Katalysatoren hergestellt. Derartige hochaktive Katalysatoren sind beispielsweise Cäsiumhydroxid und Multimetallcyanidkatalysatoren, auch als DMC-Katalysatoren bezeichnet. Ein häufig eingesetzter DMC-Katalysator ist das Zinkhexacyanocobaltat. Der DMC-Katalysator kann nach der Umsetzung im Polyetheralkohol belassen werden, üblicherweise wird er entfernt, beispielsweise durch Sedimentation oder Filtration.

Weiterhin können Polybutadiendiole mit einer Molmasse von 500 - 10000 g/mol bevorzugt 1000-5000 g/mol, insbesondere 2000 - 3000 g/mol verwendet werden. TPU's welche unter der Verwendung dieser Polyole hergestellt wurden, können nach thermoplastischer Verarbeitung strahlenvernetzt werden. Dies führt z.B. zu einem besseren Abbrennverhalten.

Statt eines Polyols können auch Mischungen verschiedener Polyole eingesetzt werden.
c) Als Kettenverlängerungsmittel (c) können allgemein bekannte aliphatische, araliphatische, aromatische und/oder cycloaliphatische Verbindungen mit einem Molekulargewicht von 50 bis 499, bevorzugt 2-funktionelle Verbindungen, eingesetzt werden, beispielsweise Diamine und/oder Alkandiole mit 2 bis 10 C-Atomen im Alkylenrest, insbesondere 1,3-Propandiol, Butandiol-1,4, Hexandiol-1,6 und/oder Di-, Tri-, Tetra-, Penta-, Hexa-, Hepta-, Okta-, Nona- und/oder Dekaalkylenglykole mit 3 bis 8 Kohlenstoffatomen, bevorzugt entsprechende Oligo- und/oder Polypropylenglykole, wobei auch Mischungen der Kettenverlängerer eingesetzt werden können.

Besonders bevorzugt handelt es sich bei den Komponenten a) bis c) um difunktionelle Verbindungen, d.h. Diisocyanate (a), difunktionelle Polyole, bevorzugt Polyetherole (b) und difunktionelle Kettenverlängerungsmittel, bevorzugt Diole.
d) Geeignete Katalysatoren, welche insbesondere die Reaktion zwischen den NCO-Gruppen der Diisocyanate (a) und den Hydroxylgruppen der Aufbaukomponenten (b) und (c) beschleunigen, sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylaminoethoxy)-ethanol, Diazabicyclo-(2,2,2)-octan und ähnliche sowie insbesondere organische Metallverbindungen wie Titansäureester, Eisenverbindungen wie z.B. Eisen-(III)- acetylacetonat, Zinnverbindungen, z.B. Zinndiacetat, Zinndioctoat, Zinndilaurat oder die Zinndialkylsalze aliphatischer Carbonsäuren wie Dibutylzinndiacetat, Dibutylzinndilaurat oder ähnliche. Die Katalysatoren werden üblicherweise in Mengen von 0,0001 bis 0,1 Gew.-Teilen pro 100 Gew.-Teile Polyhydroxylverbindung (b) eingesetzt.

Neben Katalysatoren (d) können den Aufbaukomponenten (a) bis (c) auch übliche Hilfsmittel und/oder Zusatzstoffe (e) hinzugefügt werden. Genannt seien beispielsweise Treibmittel, oberflächenaktive Substanzen, Keimbildungsmittel, Gleit- und Entformungshilfen, Farbstoffe und Pigmente, Antioxidantien, z.B. gegen Hydrolyse, Licht, Hitze oder Verfärbung, anorganische und/oder organische Füllstoffe, Flammschutzmittel, Verstärkungsmittel und Weichmacher, Metalldeaktivatoren. In einer bevorzugten Ausführungsform fallen unter die Komponente (e) auch Hydrolyseschutzmittel wie beispielsweise polymere und niedermolekulare Carbodiimide. Besonders bevorzugt enthält das thermoplastische Polyurethan in den erfindungsgemäßen Materialien Melamincyanurat, das als Flammschutzmittel wirkt. Bevorzugt wird Melamincyanurat in einer Menge zwischen 0,1 und 60 Gew.-%, besonders bevorzugt zwischen 5 und 40 Gew.-%, insbesondere zwischen 15 und 25 Gew.-% eingesetzt, jeweils bezogen auf das Gesamtgewicht des TPU. Bevorzugt enthält das thermoplastische Polyurethan Triazol und/oder Triazolderivat und Antioxidantien in einer Menge von 0,1 bis 5 Gew.-% bezogen auf das Gesamtgewicht des thermoplastischen Polyurethans. Als Antioxidantien sind im allgemeinen Stoffe geeignet, welche unerwünschte oxidative Prozesse im zu schützenden Kunststoff hemmen oder verhindern. Im allgemeinen sind Antioxidantien kommerziell erhältlich. Beispiele für Antioxidantien sind sterisch gehinderte Phenole, aromatische Amine, Thiosynergisten, Organophosphorverbindungen des trivalenten Phosphors, und Hindered Amine Light Stabilizers. Beispiele für Sterisch gehinderte Phenole finden sich in Plastics Additive Handbook, 5th edition, H. Zweifel, ed, Hanser Publishers, München, 2001 ([1]), S.98-107 und S.116-121. Beispiele für Aromatische Amine finden sich in [1] S.107-108. Beispiele für Thiosynergisten sind gegeben in [1], S.104-105 und S.112-113. Beispiele für Phosphite finden sich in [1], S.109-112.Beispiele für Hindered Amine Light Stabilizer sind gegeben in [1], S.123-136. Zur Verwendung eignen sich bevorzugt phenolische Antioxidantien. In einer bevorzugten Ausführungsform weisen die Antioxidantien, insbesondere die phenolischen Antioxidantien, eine Molmasse von größer 350 g/mol, besonders bevorzugt von größer 700g/mol und einer maximalen Molmasse < 10000 g/mol bevorzugt < 3000 g/mol auf. Ferner besitzen sie bevorzugt einen Schmelzpunkt von kleiner 180°C. Weiterhin werden bevorzugt Antioxidantien verwendet, die amorph oder flüssig sind.

Neben den genannten Komponenten a), b) und c) und gegebenenfalls d) und e) können auch Kettenregler, üblicherweise mit einem Molekulargewicht von 31 bis 3000, eingesetzt werden. Solche Kettenregler sind Verbindungen, die lediglich eine gegenüber Isocyanaten reaktive funktionelle Gruppe aufweisen, wie z. B. monofunktionelle Alkohole, monofunktionelle Amine und/oder monofunktionelle Polyole. Durch solche Kettenregler kann ein Fließverhalten, insbesondere bei TPUs, gezielt eingestellt werden. Kettenregler können im allgemeinen in einer Menge von 0 bis 5, bevorzugt 0,1 bis 1 Gew.-Teile, bezogen auf 100 Gew.-Teile der Komponente b) eingesetzt werden und fallen definitionsgemäß unter die Komponente (c).

Alle in dieser Schrift genannten Molekulargewichte weisen die Einheit [g/mol] auf.

Zur Einstellung der Härte der TPUs können die Aufbaukomponenten (b) und (c) in relativ breiten molaren Verhältnissen variiert werden. Bewährt haben sich molare Verhältnisse von Komponente (b) zu insgesamt einzusetzenden Kettenverlängerungsmitteln (c) von 10 : 1 bis 1 : 10, insbesondere von 1 : 1 bis 1 : 4, wobei die Härte der TPU mit zunehmendem Gehalt an (c) ansteigt.

Bevorzugt wird als thermoplastisches Polyurethan weiches weichmacherfreies thermoplastisches Polyurethan bevorzugt mit einer Härte kleiner 95 Shore A, besonders bevorzugt bis 90 Shore A eingesetzt. In Verschleiß- und Stoßschutzanwendungen kommen alle TPU bis 80 Shore D in Frage. In hydrolyseempflindlichen Anwendungen sind Ether-TPU zu bevorzugen. In besonders lichtexponieten Anwendungen sind alliphatische TPU zu bevorzugen. Das thermoplastische Polyurethan weist bevorzugt ein zahlenmittleres Molekulargewicht von mindestens 40000 g/mol, besonders bevorzugt mindestens 80000 g/mol, insbesondere mindestens 120000 g/mol auf.

Besonders bevorzugt ist, dass das thermoplastische Polyurethan eine Shore-Härte von 45 A bis 80 A, eine Zugfestigkeit nach DIN 53504 von größer 15 MPa, eine Weiterreißfestigkeit nach DIN 53515 von größer 30 N/mm und einen Abrieb nach DIN 53516 von kleiner 250 mm³ aufweist.

Die erfindungsgemäßen Artikel zeichnen sich insbesondere auch durch die ausgezeichnete Haftung zwischen dem thermoplastischen Polyurethan und dem technischen Kunststoff, insbesondere dem Polyamid bzw. dem Gummi aus. Bevorzugt sind deshalb insbesondere auch Artikel, bei denen für den Verbund zwischen Gummi und thermoplastischen Polyurethan und für den Verbund zwischen technischem Kunststoff, insbesondere Polyamid und thermoplastischen Polyurethan der Schälwiderstand nach DIN EN 1464 jeweils mindestens 1 N/mm, bevorzugt mindestens 2 N/mm beträgt.

Aufgrund ihrer besonders guten Haftung sind TPU gemäß der WO 03/014179 bevorzugt. Die nachfolgenden Ausführungen bis zu den Beispielen beziehen sich auf diese besonders bevorzugten TPU. Diese TPU haften besonders gut, da die Verarbeitungstemperaturen höher sind als bei anderen "klassischen" TPU mit vergleichbaren Härten und sich bei diesen Bedingungen die besten Haftfestigkeiten erzielen lassen. Diese besonders bevorzugten TPU sind bevorzugt erhältlich durch Umsetzung von (a) Isocyanaten mit (b1) Polyesterdiolen mit einem Schmelzpunkt größer 150°C, (b2) Polyetherdiolen und/oder Polyesterdiolen jeweils mit einem Schmelzpunkt kleiner 150°C und einem Molekulargewicht von 501 bis 8000 g/mol sowie gegebenenfalls (c) Diolen mit einem Molekulargewicht von 62 g/mol bis 500 g/mol. Besonders bevorzugt sind dabei thermoplastische Polyurethane, bei denen das Molverhältnis von den Diolen (c) mit einem Molekulargewicht von 62 g/mol bis 500 g/mol zur Komponente (b2) kleiner 0,2, besonders bevorzugt 0,1 bis 0,01, beträgt. Besonders bevorzugt sind thermoplastische Polyurethane, bei denen die Polyesterdiole (b1), die bevorzugt ein Molekulargewicht von 1000 g/mol bis 5000 g/mol besitzen, die folgende Struktureinheit (I) aufweisen: 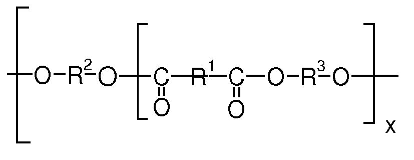 mit den folgenden Bedeutungen für R¹, R², und X:
- R¹:: Kohlenstoffgerüst mit 2 bis 15 Kohlenstoffatomen, bevorzugt eine Alkylengruppe mit 2 bis 15 Kohlenstoffatomen und/oder ein bivalenter aromatischer Rest mit 6 bis 15 Kohlenstoffatomen, besonders bevorzugt mit 6 bis 12 Kohlenstoffatomen
- R²:: gegebenenfalls verzweigtkettige Alkylengruppe mit 2 bis 8 Kohlenstoffatomen, bevorzugt 2 bis 6, besondere bevorzugt 2 bis 4 Kohlenstoffatomen, insbesondere -CH₂-CH₂- und/oder -CH₂-CH₂-CH₂-CH₂-,
- R³:: gegebenenfalls verzweigtkettige Alkylengruppe mit 2 bis 8 Kohlenstoffatomen, bevorzugt 2 bis 6, besonders bevorzugt 2 bis 4 Kohlenstoffatomen, insbesondere -CH₂-CH₂- und/oder -CH₂-CH₂-CH₂-CH₂-,
- X:: eine ganze Zahl aus dem Bereich 5 bis 30. Der eingangs dargestellte bevorzugte Schmelzpunkt und/oder das bevorzugte Molekulargewicht beziehen sich bei dieser bevorzugten Ausführungsform auf die dargestellte Struktureinheit (I).

Unter dem Ausdruck "Schmelzpunkt" ist in dieser Schrift das Maximum des Schmelzpeaks einer Aufheizkurve zu verstehen, die mit einem handelsüblichen DSC-Gerät (z.B. DSC 7 / Fa. Perkin-Elmer) gemessen wurde.

Die in dieser Schrift angegebenen Molekulargewichte stellen die zahlenmittleren Molekulargewichte dar in [g/mol].

Diese besonders bevorzugten thermoplastischen Polyurethane können bevorzugt dadurch hergestellt werden, dass man einen, bevorzugt hochmolekularen, bevorzugt teilkristallinen, thermoplastischen Polyester mit einem Diol (c) umsetzt und anschließend das Umsetzungsprodukt aus (i) enthaltend (b1) Polyesterdiol mit einem Schmelzpunkt größer 150^{°C} sowie gegebenenfalls (c) Diol zusammen mit (b2) Polyetherdiolen und/
oder Polyesterdiolen jeweils mit einem Schmelzpunkt kleiner 150°C und einem Molekulargewicht von 501 bis 8000 g/mol sowie gegebenenfalls weiteren (c) Diolen mit einem Molekulargewicht von 62 bis 500 g/mol mit (a) Isocyanat gegebenenfalls in Gegenwart von (d) Katalysatoren und/oder (e) Hilfsmitteln umsetzt.

Bevorzugt ist bei der Umsetzung (ii) das Molverhältnis von den Diolen (c) mit einem Molekulargewicht von 62 g/mol bis 500 g/mol zu der Komponente (b2) kleiner 0,2, bevorzugt 0,1 bis 0,01.

Während durch den Schritt (i) die Hartphasen durch den im Schritt (i) eingesetzten Polyester für das Endprodukt zur Verfügung gestellt werden, erfolgt durch den Einsatz der Komponente (b2) im Schritt (ii) der Aufbau der Weichphasen. Die bevorzugte technische Lehre besteht darin, dass Polyester mit einer ausgeprägten, gut kristallisierenden Hartphasenstruktur bevorzugt in einem Reaktionsextruder aufgeschmolzen und mit einem niedermolekularen Diol zunächst abgebaut werden zu kürzeren Polyestern mit freien Hydroxylendgruppen. Hierbei bleibt die ursprüngliche hohe Kristallisationstendenz des Polyesters erhalten und kann anschließend genutzt werden, um bei rasch verlaufender Umsetzung TPU mit den vorteilhaften Eigenschaften zu erhalten, als da sind hohe Zugfestigkeitswerte, niedrige Abriebswerte und wegen des hohen und engen Schmelzbereichs hohe Wärmeformbeständigkeiten und niedrige Druckverformungsreste. Somit werden nach dem bevorzugten Verfahren bevorzugt hochmolekulare, teilkristalline, thermoplastische Polyester mit niedermolekularen Diolen (c) unter geeigneten Bedingungen in kurzer Reaktionszeit abgebaut zu schnell kristallisierenden Poly-Esterdiolen (b1), die ihrerseits dann mit anderen Polyesterdiolen und/oder Polyetherdiolen und Diisocyanaten in hochmolekulare Polymerketten eingebunden werden.

Dabei weist der eingesetzte thermoplastische Polyester, d.h. vor der Umsetzung (i) mit dem Diol (c), bevorzugt ein Molekulargewicht von 15000 g/mol bis 40000 g/mol sowie bevorzugt einen Schmelzpunkt von größer 160^{°C}, besonders bevorzugt von 170^{°C} bis 260^{°C} auf.

Als Ausgangsprodukt, d.h. als Polyester, der in dem Schritt (i) bevorzugt in geschmolzenem Zustand besonders bevorzugt bei einer Temperatur von 230^{°C} bis 280^{°C} bevorzugt für eine Dauer von 0,1 min bis 4 min, besonders bevorzugt 0,3 min bis 1 min mit dem oder den Diol(en) (c) umgesetzt wird, können allgemein bekannte, bevorzugt hochmolekulare, bevorzugt teilkristalline, thermoplastische Polyester, beispielsweise in granulierter Form, eingesetzt werden. Geeignete Polyester basieren beispielsweise auf aliphatischen, cycloaliphatischen, araliphatischen und/oder aromatischen Dicarbonsäuren, beispielsweise Milchsäure und/oder Terephthalsäure sowie aliphatischen, cycloaliphatischen, araliphatischen und/oder aromatischen Dialkoholen, beispielsweise Ethandiol-1,2, Butandiol-1,4 und/oder Hexandiol-1,6.

Besonders bevorzugt werden als Polyester eingesetzt: Poly-L-Milchsäure und/oder Polyalkylenterephthalat, beispielsweise Polyethylenterephthalat, Polypropylenterephthalat, Polybutylenterephthalat, insbesondere Polybutylenterephthalat.

Die Herstellung dieser Ester aus den genannten Ausgangsstoffen ist dem Fachmann allgemein bekannt und vielfach beschrieben. Geeignete Polyester sind zudem kommerziell erhältlich

Den thermoplastischen Polyester schmilzt man bevorzugt bei einer Temperatur von 180^{°C} bis 270^{°C} auf. Die Umsetzung (i) mit dem Diol (c) führt man bevorzugt bei einer Temperatur von 230^{°C} bis 280^{°C}, bevorzugt 240^{°C} bis 280°C durch.

Als Diol (c) können in dem Schritt (i) zur Umsetzung mit dem thermoplastischen Polyester und gegebenenfalls im Schritt (ii) allgemein bekannte Diole mit einem Molekulargewicht von 62 bis 500 g/mol eingesetzt werden, beispielsweise die an späterer Stelle genannten, z.B. Ethylenglykol, 1,3-Propandiol, 1,4-Butandiol, 1,5-Pentandiol, 1,6-Hexandiol, Heptandiol, Oktandiol, bevorzugt Butan-1,4-diol und/oder Ethan-1,2-diol.

Das Gewichtsverhältnis vom thermoplastischen Polyester zum Diol (c) in dem Schritt (i) beträgt üblicherweise 100 : 1,0 bis 100 : 10, bevorzugt 100 : 1,5 bis 100 : 8,0.

Die Umsetzung des thermoplastischen Polyesters mit dem Diol (c) in dem Umsetzungsschritt (i) wird bevorzugt in Gegenwart von üblichen Katalysatoren, beispielsweise solchen, die an späterer Stelle beschrieben werden, durchgeführt. Bevorzugt werden für diese Umsetzung Katalysatoren auf der Basis von Metallen eingesetzt. Bevorzugt führt man die Umsetzung im Schritt (i) in Gegenwart von 0,1 bis 2 Gew.-% Katalysatoren, bezogen auf das Gewicht des Diols (c), durch. Die Umsetzung in Gegenwart derartiger Katalysatoren ist vorteilhaft, um die Reaktion in der zur Verfügung stehenden kurzen Verweilzeit in dem Reaktor, beispielsweise einem Reaktionsextruder durchführen zu können.

Als Katalysatoren kommen beispielsweise für diesen Umsetzungsschritt (i) in Frage: Tetrabutylorthotitanat und/oder Zinn-(II)-Dioctoat, bevorzugt Zinn-dioctoat.

Das Polyesterdiol (b1) als Umsetzungsprodukt aus (i) weist bevorzugt ein Molekulargewicht von 1000 g/mol bis 5000 g/mol auf. Der Schmelzpunkt des Polyesterdiols als Umsetzungsprodukt aus (i) beträgt bevorzugt 150°C bis 260°C, insbesondere 165 bis 245°C, d.h. dass das Umsetzungsprodukt des thermoplastischen Polyesters mit dem Diol (c) im Schritt (i) Verbindungen mit dem genannten Schmelzpunkt enthält, die in dem anschließenden Schritt (ii) eingesetzt werden.

Durch die Umsetzung des thermoplastischen Polyesters mit dem Diol (c) in dem Schritt (i) wird die Polymerkette des Polyesters durch das Diol (c) durch Umesterung gespalten. Das Umsetzungsprodukt des TPU weist deshalb freie Hydroxylendgruppen auf und wird bevorzugt in dem weiteren Schritt (ii) zu dem eigentlichen Produkt, dem TPU, weiterverarbeitet.

Die Umsetzung des Reaktionsproduktes aus dem Schritt (i) in dem Schritt (ii) erfolgt bevorzugt durch Zugabe von a) Isocyanat (a) sowie (b2) Polyetherdiolen und/oder Polyesterdiolen jeweils mit einem Schmelzpunkt kleiner 150°C und einem Molekulargewicht von 501 bis 8000 g/mol sowie gegebenenfalls weiteren Diolen (c) mit einem Molekulargewicht von 62 bis 500, (d) Katalysatoren und/oder (e) Hilfsstoffen zu dem Reaktionsprodukt aus (i). Die Umsetzung von dem Reaktionsprodukt mit dem Isocyanat erfolgt über die in dem Schritt (i) entstandenen Hydroxylendgruppen. Die Umsetzung in dem Schritt (ii) erfolgt bevorzugt bei einer Temperatur von 190 bis 250°C bevorzugt für eine Dauer von 0,5 bis 5 min, besonders bevorzugt 0,5 bis 2 min, bevorzugt in einem Reaktionsextruder, besonders bevorzugt in dem gleichen Reaktionsextruder, in dem auch der Schritt (i) durchgeführt wurde. Beispielsweise kann die Umsetzung des Schrittes (i) in den ersten Gehäusen eines üblichen Reaktionsextruders erfolgen und an späterer Stelle, d.h. späteren Gehäusen, nach der Zugabe der Komponenten (a) und (b2), die entsprechende Umsetzung des Schrittes (ii) durchgeführt werden. Beispielsweise können die ersten 30 bis 50 % der Länge des Reaktionsextruders für den Schritt (i) verwendet und die restlichen 50 bis 70 % für den Schritt (ii) eingesetzt werden.

Die Umsetzung in dem Schritt (ii) erfolgt bevorzugt bei einem Überschuss der Isocyanatgruppen zu den gegenüber Isocyanaten reaktiven Gruppen. Bevorzugt beträgt in der Umsetzung (ii) das Verhältnis der Isocyanatgruppen zu den Hydroxylgruppen 1 : 1 bis 1,2 : 1, besonders bevorzugt 1,02 : 1 bis 1,2 : 1.

Bevorzugt führt man die Umsetzungen (i) und (ii) in einem allgemein bekannten Reaktionsextruder durch. Derartige Reaktionsextruder sind beispielhaft in den Firmenschriften von Werner & Pfleiderer oder in der DE-A 2 302 564 beschrieben.

Bevorzugt wird das bevorzugte Verfahren derart durchgeführt, dass man in das erste Gehäuse eines Reaktionsextruders mindestens einen thermoplastischen Polyester, z.B. Polybutylenterephthalat, dosiert und bei Temperaturen bevorzugt zwischen 180°C bis 270°C, bevorzugt 240°C bis 270°C aufschmilzt, in ein nachfolgendes Gehäuse ein Diol (c), z.B. Butandiol, und bevorzugt einen Umesterungskatalysator zugibt, bei Temperaturen zwischen 240°C bis 280°C den Polyester durch das Diol (c) zu Polyesteroligomeren mit Hydroxylendgruppen und Molekulargewichten zwischen 1000 bis 5000 g/mol abbaut, in einem nachfolgenden Gehäuse Isocyanat (a) und (b2) gegenüber Isocyanaten reaktiven Verbindungen mit einem Molekulargewicht von 501 bis 8000 g/mol sowie gegebenenfalls (c) Diole mit einem Molekulargewicht von 62 bis 500, (d) Katalysatoren und/oder (e) Hilfsstoffe zudosiert und anschließend bei Temperaturen von 190 bis 250°C den Aufbau zu den bevorzugten thermoplastischen Polyurethanen durchführt.

Bevorzugt werden im Schritt (ii) mit Ausnahme der im Umsetzungsprodukt von (i) enthaltenen (c) Diole mit einem Molekulargewicht von 62 bis 500 keine (c) Diole mit einem Molekulargewicht von 62 bis 500 zugeführt.

Der Reaktionsextruder weist in dem Bereich, in dem der thermoplastische Polyester geschmolzen wird, bevorzugt neutrale und/oder rückwärtsfördernde Knetblöcke und Rückförderelemente auf sowie in dem Bereich, in dem der thermoplastische Polyester mit dem Diol umgesetzt wird, bevorzugt Schneckenmischelemente, Zahnscheiben und/ oder Zahnmischelemente in Kombination mit Rückförderelementen.

Nach dem Reaktionsextruder wird die klare Schmelze üblicherweise mittels einer Zahnradpumpe einer Unterwassergranulierung zugeführt und granuliert.

Die besonders bevorzugten thermoplastischen Polyurethane zeigen optisch klare, einphasige Schmelzen, die rasch erstarren und infolge der teilkristallinen Polyesterhartphase schwach opake bis weiß-undurchsichtige Formkörper bilden. Das rasche Erstarrungsverhalten ist ein entscheidender Vorteil zu bekannten Rezepturen und Herstellverfahren für thermoplastische Polyurethane. Das rasche Erstarrungsverhalten ist so ausgeprägt, dass selbst Produkte mit Härten 50 bis 60 Shore A im Spritzguss mit Zykluszeiten kleiner 35s verarbeitbar sind. Auch in der Extrusion, z.B. bei der Blasfolienherstellung, treten keinerlei TPU-typische Probleme wie Verkleben oder Verblocken der Folien oder Schläuche auf.

Der Anteil des thermoplastischen Polyesters in dem Endprodukt, d.h. dem thermoplastischen Polyurethan, beträgt bevorzugt 5 bis 75 Gew.-%. Besonders bevorzugt stellen die bevorzugten thermoplastischen Polyurethane Produkte der Reaktion eines Gemisches enthaltend 10 bis 70 Gew.-% des Umsetzungsproduktes aus (i), 10 bis 80 Gew.-% (b2) und 10 bis 20 Gew.-% (a) dar, wobei die Gewichtsangaben auf das Gesamtgewicht des Gemisches enthaltend (a), (b2), (d), (e) und das Umsetzungsprodukt aus (i) bezogen sind.

Die bevorzugten thermoplastischen Polyurethane weisen bevorzugt eine Härte von Shore 45 A bis Shore 78 D, besonders bevorzugt 50 A bis 75 D auf.

Bevorzugt weisen die bevorzugten thermoplastischen Polyurethane die folgende Struktureinheit (II) auf: 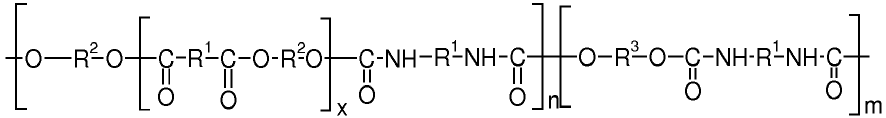 mit den folgenden Bedeutungen für R¹, R², R³ und X:
- R¹:: Kohlenstoffgerüst mit 2 bis 15 Kohlenstoffatomen, bevorzugt eine Alkylengruppe mit 2 bis 15 Kohlenstoffatomen und/oder ein aromatischer Rest mit 6 bis 15 Kohlenstoffatomen,
- R²:: gegebenenfalls verzweigtkettige Alkylengruppe mit 2 bis 8 Kohlenstoffatomen, bevorzugt 2 bis 6, besondere bevorzugt 2 bis 4 Kohlenstoffatomen, insbesondere -CH₂-CH₂- und/oder -CH₂-CH₂-CH₂-CH₂-,
- R³:: Rest, der sich durch den Einsatz von Polyetherdiolen und/oder Polyesterdiolen mit jeweils Molekulargewichten zwischen 501 g/mol und 8000 g/mol als (b2) oder durch den Einsatz von Alkandiolen mit 2 bis 12 Kohlenstoffatomen für die Umsetzung mit Diisocyanaten ergibt,
- X:: eine ganze Zahl aus dem Bereich 5 bis 30,
- n, m:: eine ganze Zahl aus dem Bereich 5 bis 20.

Der Rest R¹ wird durch das eingesetzte Isocyanat definiert, der Rest R² durch das Umsetzungsprodukt des thermoplastischen Polyesters mit dem Diol (c) in (i) und der Rest R³ durch die Ausgangskomponenten (b2) und gegebenenfalls (c) bei der Herstellung der TPU.

### Beispiele:

Mittels Zweikomponentenspritzguss wurden mit den folgenden Komponenten Verbundkörper hergestellt:
1) Naturkautschuk NR 70 Shore A mit Elastollan® C 65 A 15 HPM (Elastogran GmbH) und Ultramid® B 3 K (BASF Aktiengesellschaft)
2) Styrol-Butadien-Kautschuk SBR 70 Shore A mit Elastollan® C 65 A 15 HPM (Elastogran GmbH) und Ultramid® B 3 WG 6 (BASF Aktiengesellschaft)
3) Nitril-Butadien-Kautschuk NBR 70 Shore A mit Elastollan® C 65 A 15 HPM (Elastogran GmbH) und Ultramid® A 3 WG 6 (BASF Aktiengesellschaft)

Dabei wurde das Gummiteil (Kautschukteil) auf der Oberfläche mit einer Anlage der Fa. Plasmatreat mit Plasmaerzeuger RD1004 plasmabehandelt. Die Plasmaquelle wurde in einem Abstand von 6 mm und mit einer Geschwindigkeit von 2 m/min relativ zur Oberfläche des Gummiartikels bewegt. Das Plasma wurde durch eine Gasströmung entlang der Entladungsstrecke auf die Oberfläche des Gummiartikels transportiert. Die Plasmabehandlung dauerte 5 s. Als Gas wurde Druckluft eingesetzt. Der Gasfluss betrug 2 m³/h pro Düse. Die Arbeitsfrequenz betrug 18 kHz. Die Anregungsspannung bzw. die Elektrodenspannung betrugt 8 kV. Es wurde eine rotierende Plasmadüsen eingesetzt. Oberflächentemperatur des Gummiteils betrug 30°C.

Anschließend wurden die Gummiteile in eine Spritzgussapparatur eingelegt und das thermoplastische Polyurethan an die plasmabehandelte Oberfläche angespritzt. Die Temperatur beim Spritzgießen vom thermoplastischen Polyurethan betrug dabei 210°C. Die Umfangsgeschwindigkeit beim Plastifiziern lag bei 0,1 m/s, der Staudruck betrug 20 bar. Die Menge an eingespritztem TPU betrug 40 g.

Nachdem das thermoplastische Polyurethan erstarrt war, d.h. nach ca. 40 sec, wurde das Bauteil entnommen und in eine andere Form auf einer anderen Maschine eingesetzt und das Polyamid angespritzt. Ein Anspritzen in einer Maschine wäre bei entsprechender Maschinentechnik problemlos möglich. Die Temperatur beim Spritzgießen vom Polyamid betrug 260°C. Die eingestellten Maschinentemperaturen betrugen zwischen 240 und 260°C, der Einzug 40°C. Der Einspritzdruck war 200 bar. Der Nachdruck wurde bei 100 % des Einspritzdruckes gehalten. Plastifiziert wurde bei 0,2 m/s Umfangsgeschwindigkeit der Schnecke.

Die Verbundelemente zeichneten sich dadurch aus, dass das TPU sowohl am Gummi als auch am Polyamid sehr gut haftete.

## Patentansprüche

1. Artikel enthaltend thermoplastisches Polyurethan, das jeweils in direktem Kontakt sowohl mit Gummi als auch mit technischem Kunststoff haftend verbunden ist, **dadurch gekennzeichnet, dass** der technische Kunststoff Polyamid, Polybutylentherephthalat und/oder Polyethylenterephthalat ist.

2. Artikel nach Anspruch 1, **dadurch gekennzeichnet, dass** das Gummi und der technische Kunststoff jeweils getrennt in direktem Kontakt mit dem thermoplastischen Polyurethan verbunden sind.

3. Artikel nach Anspruch 1, **dadurch gekennzeichnet, dass** das thermoplastische Polyurethan zwischen dem Gummi und dem technischen Kunststoff vorliegt.

4. Artikel nach Anspruch 3, **dadurch gekennzeichnet, dass** die Schicht des thermoplastischen Polyurethans eine Dicke zwischen 0,2 und 6 mm aufweist.

5. Artikel nach Anspruch 1, **dadurch gekennzeichnet, dass** es sich bei dem Artikel um einen Zweikomponentenspritzgussartikel mit Gummi-Einlegeteil handelt.

6. Artikel nach Anspruch 1, **dadurch gekennzeichnet, dass** das thermoplastische Polyurethan eine Shore-A Härte kleiner 95 aufweist und keine Weichmacher enthält.

7. Artikel nach Anspruch 1, **dadurch gekennzeichnet, dass** das thermoplastische Polyurethan eine Shore-Härte von 45 A bis 80 A, eine Zugfestigkeit nach DIN 53504 von größer 15 MPa, eine Weiterreißfestigkeit nach DIN 53515 von größer 30 N/mm und einen Abrieb nach DIN 53516 von kleiner 250 mm³ aufweist.

8. Artikel nach Anspruch 1, **dadurch gekennzeichnet, dass** für den Verbund zwischen Gummi und thermoplastischem Polyurethan und für den Verbund zwischen technischem Kunststoff und thermoplastischem Polyurethan der Schälwiderstand nach DIN EN 1464 jeweils mindestens 1 N/mm beträgt.

9. Artikel nach Anspruch 1, **dadurch gekennzeichnet, dass** es sich bei dem Artikel um ein Gummilager zur Lagerung von Maschinen oder Motoren oder in Kraftfahrzeugfahrwerken handelt.

10. Verfahren zur Herstellung eines Artikels enthaltend thermoplastisches Polyurethan, das jeweils in direktem Kontakt sowohl mit Gummi als auch mit technischem Kunststoff haftend verbunden ist, **dadurch gekennzeichnet, dass** man die Oberfläche eines Gummiartikels plasmabehandelt, anschließend das thermoplastische Polyurethan mit der plasmabehandelten Oberfläche in Kontakt bringt und danach den technischen Kunststoff auf das thermoplastische Polyurethan aufträgt, wobei man die Oberfläche des Gummi-Einlegeteils plasmabehandelt, indem man in einer Plasmaquelle mittels Hochspannungsentladung ein Plasma erzeugt, dieses Plasma mittels einer Plasmadüse mit der Oberfläche des Gummiartikels in Kontakt bringt und die Plasmaquelle in einem Abstand zwischen 2 mm und 25 mm mit einer Geschwindigkeit zwischen 0,1 m/min und 400 m/min relativ zur Oberfläche des Gummiartikels bewegt und die Plasmabehandlung zwischen 1 ms und 100 s dauert, man dann das plasmabehandelte Gummi-Einlegeteil in eine Form einlegt, anschließend auf die plasmabehandelte Oberfläche thermoplastisches Polyurethan mittels Spritzguss aufträgt und danach in der gleichen Form technischen Kunststoff mittels Spritzguss auf das thermoplastische Polyurethan anspritzt.

11. Verfahren nach Anspruch 10, **dadurch gekennzeichnet, dass** das thermoplastische Polyurethan zwischen dem Gummi und dem technischen Kunststoff vorliegt.

12. Verfahren nach Anspruch 11, **dadurch gekennzeichnet, dass** das thermoplastische Polyurethan eine Schicht mit einer Dicke zwischen 0,2 mm und 6 mm bildet.

13. Verfahren nach Anspruch 10, **dadurch gekennzeichnet, dass** das thermoplastische Polyurethan eine Shore-A Härte kleiner 95 aufweist und keine Weichmacher enthält.

14. Verfahren nach Anspruch 10, **dadurch gekennzeichnet, dass** das thermoplastische Polyurethan eine Shore-Härte von 45 A bis 80 - eine Zugfestigkeit nach DIN 53504 von größer 15 MPa, eine Weiterreißfestigkeit nach DIN 53515 von größer 30 N/mm und einen Abrieb nach DIN 53516 von kleiner 250 mm³ aufweist.

## Claims

1. An item comprising thermoplastic polyurethane, which has, respectively, direct-contact adhesive bonding not only to rubber but also to engineering plastic, wherein the engineering plastic is polyamide, polybutylene terephthalate and/or polyethylene terephthalate.

2. The item according to claim 1, wherein the rubber and the engineering plastic have, respectively, separate direct-contact bonding to the thermoplastic polyurethane.

3. The item according to claim 1, wherein the thermoplastic polyurethane is present between the rubber and the engineering plastic.

4. The item according to claim 3, wherein the thickness of the layer of the thermoplastic polyurethane is from 0.2 to 6 mm.

5. The item according to claim 1, which is a two-component injection-molded item with rubber insert part.

6. The item according to claim 1, wherein the Shore A hardness of the thermoplastic polyurethane is smaller than 95 and the thermoplastic polyurethane comprises no plasticizers.

7. The item according to claim 1, wherein the Shore hardness of the thermoplastic polyurethane is from 45 A to 80 A, its tensile strength to DIN 53504 is greater than 15 MPa, its tear propagation resistance to DIN 53515 is greater than 30 N/mm, and its abrasion value to DIN 53516 is smaller than 250 mm³.

8. The item according to claim 1, wherein, for the bond between rubber and thermoplastic polyurethane, and for the bond between engineering plastic and thermoplastic polyurethane, the peel resistance to DIN EN 1464 is in each case at least 1 N/mm.

9. The item according to claim 1, wherein the item is a rubber bearing for the mounting of machinery or motors, or in motor vehicle chassis.

10. A process for production of an item comprising thermoplastic polyurethane, which has, respectively, direct-contact adhesive bonding not only to rubber but also to engineering plastic, which comprises plasma-treating the surface of a rubber item, then bringing the thermoplastic polyurethane into contact with the plasma-treated surface, and then applying the engineering plastic to the thermoplastic polyurethane, where the surface of the rubber insert part is plasma-treated in that a plasma is generated by means of high-voltage discharge in a plasma source, this plasma is brought into contact with the surface of the rubber item by means of a plasma nozzle, and the plasma source is moved within a distance of from 2 to 25 mm with a velocity of from 0.1 m/min to 400 m/min relative to the surface of the rubber item, and the plasma-treatment time is from 1 ms to 100 s, then the plasma-treated rubber insert part is inserted into a mold, thermoplastic polyurethane is then applied by means of injection molding to the plasma-treated surface, and then engineering plastic is molded by means of injection molding onto the thermoplastic polyurethane in the same mold.

11. The process according to claim 10, wherein the thermoplastic polyurethane is present between the rubber and the engineering plastic.

12. The process according to claim 11, wherein the thermoplastic polyurethane forms a layer whose thickness is from 0.2 mm to 6 mm.

13. The process according to claim 10, wherein the Shore A hardness of the thermoplastic polyurethane is smaller than 95 and the thermoplastic polyurethane comprises no plasticizers.

14. The process according to claim 10, wherein the Shore hardness of the thermoplastic polyurethane is from 45 A to 80 A, its tensile strength to DIN 53504 is greater than 15 MPa, its tear propagation resistance to DIN 53515 is greater than 30 N/mm, and its abrasion value to DIN 53516 is smaller than 250 mm³.

## Revendications

1. Article contenant un polyuréthane thermoplastique, qui est relié par adhésion à chaque fois en contact direct aussi bien avec un caoutchouc qu'avec une matière plastique technique, **caractérisé en ce que** la matière plastique technique est un polyamide, un polybutylène téréphtalate et/ou un polyéthylène téréphtalate.

2. Article selon la revendication 1, **caractérisé en ce que** le caoutchouc et la matière plastique technique sont chacun reliés séparément en contact direct avec le polyuréthane thermoplastique.

3. Article selon la revendication 1, **caractérisé en ce que** le polyuréthane thermoplastique est situé entre le caoutchouc et la matière plastique technique.

4. Article selon la revendication 3, **caractérisé en ce que** la couche de polyuréthane thermoplastique présente une épaisseur comprise entre 0,2 et 6 mm.

5. Article selon la revendication 1, **caractérisé en ce que** l'article est un article moulé par injection bicomposant comprenant une pièce d'insertion en caoutchouc.

6. Article selon la revendication 1, **caractérisé en ce que** le polyuréthane thermoplastique présente une dureté Shore A inférieure à 95 et ne contient pas de plastifiant.

7. Article selon la revendication 1, **caractérisé en ce que** le polyuréthane thermoplastique présente une dureté Shore de 45 A à 80 A, une résistance à la traction selon DIN 53504 supérieure à 15 MPa, une résistance à la propagation d'une fissure selon DIN 53515 supérieure à 30 N/mm et une abrasion selon DIN 53516 inférieure à 250 mm³.

8. Article selon la revendication 1, **caractérisé en ce que** la résistance au pelage selon DIN EN 1464 est à chaque fois d'au moins 1 N/mm pour la liaison entre le caoutchouc et le polyuréthane thermoplastique et pour la liaison entre la matière plastique technique et le polyuréthane thermoplastique.

9. Article selon la revendication 1, **caractérisé en ce que** l'article est un support en caoutchouc pour le stockage de machines ou de moteurs ou dans des châssis de véhicules automobiles.

10. Procédé de fabrication d'un article contenant un polyuréthane thermoplastique, qui est relié par adhésion à chaque fois en contact direct aussi bien avec un caoutchouc qu'avec une matière plastique technique, **caractérisé en ce que** la surface d'un article en caoutchouc est traitée par plasma, puis le polyuréthane thermoplastique est mis en contact avec la surface traitée par plasma, puis la matière plastique technique est appliquée sur le polyuréthane thermoplastique, la surface de la pièce d'insertion en caoutchouc étant traitée par plasma par formation d'un plasma dans une source de plasma au moyen d'une décharge haute tension, mise en contact de ce plasma au moyen d'une buse à plasma avec la surface de l'article en caoutchouc, et déplacement de la source de plasma à une distance comprise entre 2 mm et 25 mm à une vitesse comprise entre 0,1 m/minute et 400 m/minute par rapport à la surface de l'article en caoutchouc, et le traitement par plasma durant entre 1 ms et 100 s, puis la pièce d'insertion en caoutchouc traitée par plasma étant insérée dans un moule, puis un polyuréthane thermoplastique étant appliqué par moulage par injection sur la surface traitée par plasma, puis une matière plastique technique étant injectée dans le même moule par moulage par injection sur le polyuréthane thermoplastique.

11. Procédé selon la revendication 10, **caractérisé en ce que** le polyuréthane thermoplastique est situé entre le caoutchouc et la matière plastique technique.

12. Procédé selon la revendication 11, **caractérisé en ce que** le polyuréthane thermoplastique forme une couche d'une épaisseur comprise entre 0,2 mm et 6 mm.

13. Procédé selon la revendication 10, **caractérisé en ce que** le polyuréthane thermoplastique présente une dureté Shore A inférieure à 95 et ne contient pas de plastifiant.

14. Procédé selon la revendication 10, **caractérisé en ce que** le polyuréthane thermoplastique présente une dureté Shore de 45 A à 80, une résistance à la traction selon DIN 53504 supérieure à 15 MPa, une résistance à la propagation d'une fissure selon DIN 53515 supérieure à 30 N/mm et une abrasion selon DIN 53516 inférieure à 250 mm³.
